# EUROPÄISCHE PATENTSCHRIFT

(11) **EP 2 781 794 B1**
(45) Veröffentlichungstag und Bekanntmachung des Hinweises auf die Patenterteilung: **11.04.2018**
(21) Anmeldenummer: 14153729.0
(22) Anmeldetag: 04.02.2014
(51) Int. Cl.: F16H 59/02, F16H 59/04

(54) **Schalteinrichtung zum Schalten eines Handschaltgetriebes eines Fahrzeugs**
Shifting device for shifting a manual gearbox of a vehicle
Dispositif de commutation pour la commutation d'une boîte de vitesses manuelle d'un véhicule

(30) Priorität: 20.03.2013 DE 102013204864
(43) Veröffentlichungstag der Anmeldung: 24.09.2014
(73) Patentinhaber: Bayerische Motoren Werke Aktiengesellschaft, 80809 München (DE)
(72) Erfinder: Schönberger, Stefan, 80937 München (DE); Thies, Achim, 80638 München (DE); Wagner, Norbert, 81549 München (DE)

(56) Entgegenhaltungen:
- EP-A2- 0 077 053
- EP-A2- 0 775 854
- DE-A1- 4 100 574
- DE-A1- 19 646 648
- DE-B3-102011 003 752

## Beschreibung

Die vorliegende Erfindung betrifft eine Schalteinrichtung zum Schalten eines Handschaltgetriebes eines Fahrzeugs gemäß dem Oberbegriff des Patentanspruches 1.

Eine derartige Schalteinrichtung ist aus der DE 10 2011 003 752 B3 bekannt. Zum technischen Hintergrund der Erfindung zählen ferner die EP 0 077 053 A2, DE 196 46 648 A1, DE 41 00 574 A1 sowie die EP 0 775 854 A2.

Bei manchen Fahrzeugen mit Handschaltgetrieben kann es beim Start des Verbrennungsmotors zu sichtbaren und spürbaren Ausschlägen am Schalthebelknauf kommen. Dies ist insbesondere bei modernen Fahrzeugen, die mit einer Motor-/Stoppautomatik ausgerüstet sind unerwünscht, da der Motor beim Stopp-and-Go-Verkehr sehr häufig abgestellt und wieder gestartet wird.

Zur Verringerung von Ausschlägen und Vibrationen des Schalthebelknaufs wurden sogenannte Schalthebeltilger in Erwägung gezogen, die jedoch ein Zusatzgewicht von circa 400g aufweisen, sowie ein schwerer Schaltknauf, der gegenüber herkömmlichen Schaltknäufen ein weiteres Zusatzgewicht von ca. 100g aufweist.

Derartige "Schwingungstilgermassen" können Schwingungen bei laufendem Verbrennungsmotor verringern. Zur Vermeidung von Ausschlägen des Schaltknaufs beim Starten des Verbrennungsmotors sind sie jedoch kaum geeignet.

Aufgabe der Erfindung ist es, eine Schalteinrichtung zum Schalten eines Handschaltgetriebes zu schaffen, die so konzipiert ist, dass, im Vergleich zu herkömmlichen Schalteinrichtungen, Vibrationen und Ausschläge des Schaltknaufs, insbesondere beim Starten des Verbrennungsmotors möglichst gering sind, wobei die Schalteinrichtung konstruktiv möglichst einfach konzipiert sein soll.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Schalteinrichtung (so genannte "äußere Schaltung") zum Schalten eines Handschaltgetriebes eines Fahrzeugs, mit einem Schalthebel und einem sich in einer Fahrzeuglängsrichtung erstreckenden Schaltarm, an dem der Schalthebel schwenkbar gelagert ist. Der Schalthebel kann beispielsweise über ein Kugelgelenk im oder am Schaltarm gelagert sein. Gemäß der Erfindung ist der Schaltarm über drei "Schaltarmlager" gelagert.

Über ein erstes Schaltarmlager ist der Schaltarm schwenkbar um eine Hochachse des Fahrzeugs und unverschieblich oder im Wesentlichen unverschieblich in einer Querrichtung des Fahrzeugs in Bezug auf eine Karosserie des Fahrzeugs gelagert. In Fahrzeuglängsrichtung und/oder in Richtung der Hochachse kann am ersten Schaltarmlager eine gewisse Verschieblichkeit oder Elastizität vorgesehen, dies muss aber nicht zwingend der Fall sein.

Gemäß der Erfindung ist ferner ein zweites, als Schwenklager ausgeführtes Schaltarmlager vorgesehen, über das ein erster (in Fahrtrichtung des Fahrzeugs betrachtet "vorderer") Endabschnitt des Schaltarms schwenkbar um eine Schwenkachse in Bezug auf ein Gehäuse des Handschaltgetriebes gelagert ist.

Desweiteren ist ein drittes Schaltarmlager (z. B. hinteres Schaltarmlager) vorgesehen, über das ein dem ersten Endabschnitt abgewandter zweiter Endabschnitt des Schaltarms in einer Fahrzeugquerrichtung elastisch und/oder verschieblich direkt oder indirekt mit einem Karosserieelement der Fahrzeugkarosserie verbunden ist.

Nach einer Weiterbildung der Erfindung ist das erste Schaltarmlager an einer Stelle des Schaltarms vorgesehen, die sich zwischen dem Schalthebel und dem zweiten Schaltarmlager und somit zwischen dem Schalthebel und Getriebe befindet.

Nach einer Weiterbildung der Erfindung ist vorgesehen, dass der Schalthebel gelenkig über eine Schaltstange mit einer Schaltwelle des Handschaltgetriebes gekoppelt ist. Durch Verschwenken des Schalthebels in einer Querrichtung des Fahrzeugs können einzelne Schaltgassen des Getriebes angewählt werden. Ein Verschwenken des Schalthebels in einer Querrichtung des Fahrzeugs bewirkt eine Drehung der Schaltstange. Demgegenüber bewirkt ein Verschwenken des Schalthebels "innerhalb einer Schaltgasse", d. h. in Fahrzeuglängsrichtung, ein Verschieben der Schaltstange in Fahrzeuglängsrichtung, wodurch einzelne Gänge des Handschaltgetriebes ein- oder ausgelegt werden können.

Der gesamte Antriebsstrang des Fahrzeugs, einschließlich des Verbrennungsmotors und des hieran angeflanschten Handschaltgetriebes, ist elastisch im Fahrzeug bzw. in Bezug auf die Fahrzeugkarosserie gelagert. Im Betrieb, insbesondere beim Starten des Verbrennungsmotors kommt es zu einem "Ruckeln" des gesamten Antriebsstrangs in Bezug auf die Karosserie. Hiermit einher geht üblicherweise eine gewisse Querbewegung des Verbrennungsmotors und des daran angeflanschten Handschaltgetriebegehäuses in Fahrzeugquerrichtung, was sich bei herkömmlichen Schalteinrichtungen mehr oder weniger über den Schaltarm und die Schaltstange auf den Schalthebel überträgt.

Da gemäß der Erfindung der Schaltarm im Bereich zwischen dem Schalthebel und dem zweiten Schaltarmlager in Querrichtung des Fahrzeugs unverschieblich oder im wesentlichen unverschieblich gelagert ist, kommt es bei einer Querbewegung des Getriebegehäuses in Bezug auf die Fahrzeugkarosserie zu einer fast vollständigen Auslöschung derartiger Störbewegungen.

Eine Querbewegung des Handschaltgetriebegehäuses im Bezug auf die Fahrzeugkarosserie bewirkt nämlich zunächst ein Verschwenken des Schaltarms um das erste Schaltarmlager, d. h. im Wesentlichen um eine Hochachse des Fahrzeugs. Da ein vorderes Ende der Schaltstange mit einer Schaltwelle des Getriebes und somit letztendlich auch mit dem Handschaltgetriebegehäuse gekoppelt ist, wird die über den Schaltarm übertragene Querbewegung am Schalthebel fast vollständig durch eine sich konstruktions- d.h. geometriebedingte, gegenläufige Bewegung der Schaltstange kompensiert. Schwingungsbewegungen des Handschaltgetriebes werden somit fast vollständig ausgeblendet, d. h. Schwingungsbewegungen des Handschaltgetriebes können sich nicht mehr oder nur deutlich abgeschwächt bis zum Schalthebel fortpflanzen.

Der Schaltarm kann, muss aber nicht notwendigerweise direkt über das zweite Schaltarmlager mit dem Getriebegehäuse gekoppelt sein. Der Schaltarm kann alternativ über das zweite Schwenklager auch zunächst mit einem Koppelelement schwenkbar verbunden sein, welches wiederum schwenkbar um eine Querachse am Getriebegehäuse gelagert sein kann.

Gemäß der Erfindung weist das als Schwenklager ausgeführte zweite Schaltarmlager eine Schwenkachse auf, die in einer Mittellängsebene des Fahrzeugs oder in einer dazu parallelen Ebene verläuft. Unter dem Begriff "Mittellängsebene" wird eine Ebene verstanden, die durch eine Hochachse und eine Längsachse des Fahrzeugs aufgespannt ist und sich durch das zweite Schaltarmlager erstreckt. Die Schwenkachse des zweiten Schaltarmlagers verläuft schräg in Bezug auf die Hochachse und in Bezug auf die Längsachse des Fahrzeugs. In Fahrtrichtung des Fahrzeugs betrachtet kann vorgesehen sein, dass sich die Schwenkachse des zweiten Schaltarmlagers von hinten unten schräg nach vorne oben erstreckt.

Nach einer Weiterbildung der Erfindung ist das erste Schaltarmlager über ein sich in einer Fahrzeugquerrichtung erstreckendes Halteelement mit der Karosserie verbunden. Das Halteelement ist vorzugsweise zugsteif und drucksteif ausgebildet. Jedoch kann vorgesehen sein, dass zwischen dem Halteelement und dem Schaltarm und/oder zwischen dem Haltelement und der Karosserie jeweils ein elastisches "Verbindungsstück" angeordnet ist, welches gewisse Montagetoleranzen kompensieren kann.

Nach einer Weiterbildung der Erfindung ist vorgesehen, dass der Schaltarm am dritten Schaltarmlager über ein Elastomerelement mit der Karosserie gekoppelt ist. Das Elastomerelement ist so ausgebildet, dass es in Querrichtung des Fahrzeugs elastisch ist, d. h. dass sich der zweite Endabschnitt des Schaltarms in gewissem Umfang in Fahrzeugquerrichtung bewegen kann. Vorzugsweise ist der Schaltarm am dritten Schaltarmlager so gelagert, dass sich der Schaltarm auch in Fahrzeuglängsrichtung zumindest ein Stück weit bewegen kann, ohne dass er mit einem Karosserieelement der Fahrzeugkarosserie zusammenstößt. Ein derartiger Längsverschiebefreiheitsgrad ist wichtig, um bei leichten Auffahrunfällen eine Beschädigung der "äußeren Schaltung" und/oder der Fahrzeugkarosserie im Bereich der äußeren Schaltung zu vermeiden.

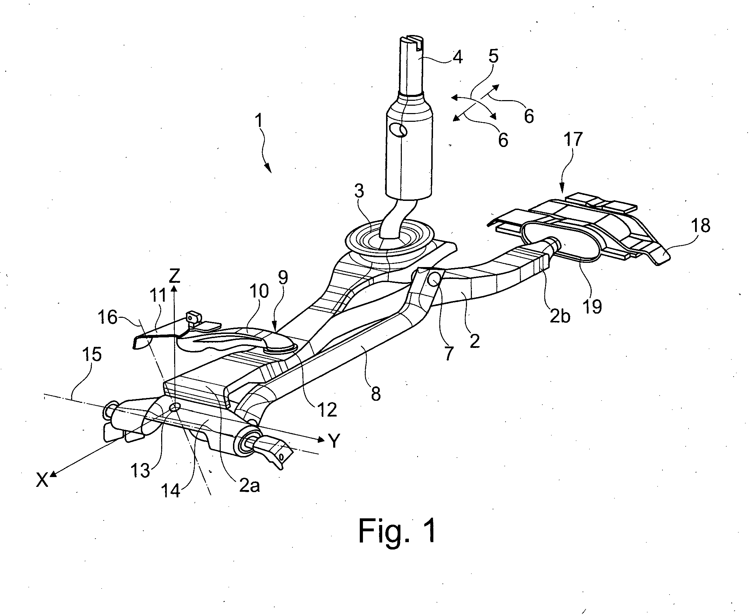

Im Folgenden wird die Erfindung im Zusammenhang mit der Zeichnung näher erläutert. Die einzige Figur 1 zeigt eine Schalteinrichtung (äußere Schaltung) gemäß der Erfindung.

Figur 1 zeigt eine "äußere Schaltung" 1 eines hier nicht näher dargestellten Handschaltgetriebes eines Fahrzeugs. Die äußere Schaltung 1 weist einen Schaltarm 2 auf, an dem über ein Kugelgelenk 3 ein von Hand zu bedienender Schalthebel 4 gelagert ist. Von oben her wird auf dem Schalthebel 4 ein hier nicht näher dargestellter Schaltknauf aufgesteckt. Über das Kugelgelenk 3 kann der Schalthebel 4 sowohl in einer Querrichtung 5 des Fahrzeugs als auch in einer Längsrichtung 6 des Fahrzeugs verschwenkt werden.

Unterhalb des Kugelgelenks 3 ist der Schalthebel 4 über ein erstes, sich in einer Fahrzeugquerrichtung erstreckendes Schwenkgelenk 7 gelenkig mit einer Schaltstange 8 verbunden. Wie aus Figur 1 ersichtlich ist, erstreckt sich die Schaltstange 8 seitlich neben dem Schaltarm 2 in Fahrzeuglängsrichtung. Ein vorderes Ende der Schaltstange 8 ist mit einer hier nicht näher dargestellten Schaltwelle, welche aus einem Gehäuse des hier nicht näher dargestellten Handschaltgetriebes herausragt, verbunden.

Durch Verschwenken des Schalthebels 4 in Querrichtung 5 können einzelne Schaltgassen des Handschaltgetriebes angewählt werden. Ein Verschwenken des Schalthebels 4 in Querrichtung 5 bewirkt eine Drehbewegung der Schaltstange 8 um ihre Längsachse und somit eine Drehbewegung der mit der Schaltstange 8 verbundenen Schaltwelle des Getriebes.

Ein Verschwenken des Schalthebels 4 in Längsrichtung 6 hingegen wird in eine Translationsbewegung der Schaltstange 8 in ihrer Längsrichtung umgesetzt. Durch Verschwenken des Schalthebels 4 in Längsrichtung 6 können einzelne Gänge des Handschaltgetriebes ein- bzw. ausgelegt werden.

Wie aus Figur 1 ersichtlich ist, ist der Schaltarm 2 über insgesamt drei Schaltarmlager gelagert. Ein erstes Schaltarmlager 9 ist im Bereich zwischen dem Schalthebel 4 und einem vorderen bzw. ersten Endabschnitt 2a des Schaltarms vorgesehen. Über das erste Schaltarmlager 9 ist der Schaltarm 2 schwenkbar um eine Hochachse z des Fahrzeugs und unverschieblich oder im Wesentlichen unverschieblich in einer Querrichtung 5 (entsprechend y-Achse) in Bezug auf eine hier nicht näher dargestellte Karosserie des Fahrzeugs gelagert.

Kommt es im Betrieb des Fahrzeugs, z. B. beim Start des Verbrennungsmotors zu einer Ruckelbewegung des Antriebsstrangs, insbesondere des Verbrennungsmotors und des daran angeflanschten Handschaltgetriebegehäuses, d. h. zu einer Verschiebung des Getriebegehäuses in y-Richtung, so überträgt sich dies in eine Schwenkbewegung des Schaltarms 2 um eine durch das erste Schaltarmlager 9 verlaufende Hochachse (parallel zur z-Achse). Das erste Schaltarmlager 9 ist nämlich über ein sich in Fahrzeugquerrichtung (y-Richtung) erstreckendes (Abstands-)Halteelement 10 mit der Fahrzeugkarosserie 11 verbunden. Da das vordere Ende der Schaltstange 8 mit der Schaltwelle des Getriebes verbunden ist, überträgt die Schaltstange 8 eine hierzu gegenläufige Querbewegung, was zu einem fast vollständigen Auslöschen derartiger Störbewegungen kommt. Relativbewegungen des Getriebes in Bezug auf die Fahrzeugkarosserie 11, 18 werden also fast vollständig ausgelöscht, d. h. fast nicht mehr auf den Schalthebel 4 übertragen.

Zwischen dem Halteelement 10 und dem Schaltarm 2 ist ein elastisches Verbindungsstück 12 vorgesehen. Ebenso kann zwischen dem Halteelement 10 und der Karosserie 11 ein elastisches Verbindungsstück vorgesehen sein. Über die elastischen Verbindungsstücke können gewisse Montagetoleranzen aufgefangen werden.

Der vordere Endabschnitt 2a des Schaltarms 2 ist über ein zweites Schaltarmlager 13 (Schwenklager) mit einem Koppelelement 14 schwenkbar gekoppelt. Das Koppelelement 14 ist schwenkbar um eine Schwenkachse 15 mit dem hier nicht näher dargestellten Gehäuse des Handschaltgetriebes verbunden.

Das zweite Schaltarmlager 13 ist, wie bereits erwähnt, als Schwenklager ausgeführt. Es zeichnet sich dadurch eine schräg verlaufende Schwenkachse 16 aus. Die Schwenkachse 16 verläuft in einer Mittellängsebene (oder einer dazu parallelen Ebene) des Fahrzeugs, d. h. in einer Ebene, welche durch eine durch das zweite Schaltarmlager verlaufende Längsachse (x-Achse) und eine ebenfalls durch das zweite Schaltarmlager 13 verlaufende Hochachse (z-Achse) aufgespannt ist. Die Schwenkachse 16 ist, wie aus Figur 1 ersichtlich ist, schräg zur x-Achse und schräg zur z-Achse. Beispielsweise kann vorgesehen sein, dass die Schwenkachse 16 mit der x-Achse einen Winkel von circa 50° einschließt.

Da die Schwenkachse 16 schräg in Bezug auf x-Achse und schräg in Bezug auf die z-Achse verläuft, können Wählkräfte bzw. Wählmomente, die bei einem Verschwenken des Schalthebels 4 in Querrichtung 5 auftreten, abgestützt werden. Verliefe die Schwenkachse 16 parallel zur x-Achse, könnten derartige Wählmomente bzw. Wählkräfte nicht abgestützt werden.

Ein dem ersten Ende 2a abgewandtes zweites bzw. hinteres Ende 2b des Schaltarms 2 ist über ein drittes Schaltarmlager 17 elastisch bzw. verschieblich direkt oder indirekt mit einem Karosserieelement 18 verbunden. Bei dem in Figur 1 gezeigten Ausführungsbeispiel ist der zweite Endabschnitt 2b über ein Elastomerlager 19 in y-Richtung elastisch mit dem Karosserieelement 19 verbunden.

## Patentansprüche

1. Schalteinrichtung (1) zum Schalten eines Handschaltgetriebes eines Fahrzeugs mit einem Getriebegehäuse, mit
- einem Schalthebel (4) und
- einem sich in einer Fahrzeuglängsrichtung (x) erstreckenden Schaltarm (2), an dem der Schalthebel (4) schwenkbar gelagert ist, wobei
- ein erstes Schaltarmlager (9) vorgesehen ist, über das der Schaltarm (2) an der Stelle des ersten Schaltarmlagers (9) schwenkbar um eine zur Fahrzeuglängsrichtung (x) senkrechten - Hochachse (z) des Fahrzeugs und unverschieblich oder im Wesentlichen unverschieblich in einer Querrichtung (y) des Fahrzeugs in Bezug auf eine Karosserie (11) des Fahrzeugs gelagert ist, wobei die Querrichtung (y) senkrecht zur Fahrzeuglängsrichtung (x) und senkrecht zur Hochachse (z) ist und
- ein zweites, als Schwenklager ausgeführtes Schaltarmlager (13), über das ein erster Endabschnitt (2a) des Schaltarms (2) schwenkbar um eine Schwenkachse (16) in Bezug auf das Getriebegehäuse gelagert ist, und
- ein drittes Schaltarmlager (17), über das ein dem ersten Endabschnitt (2a) abgewandter zweiter Endabschnitt (2b) des Schaltarms (2) elastisch und/oder verschieblich direkt oder indirekt mit einem Karosserieelement (18) der Karosserie verbunden ist,
**dadurch gekennzeichnet, dass** das zweite, als Schwenklager ausgeführte Schaltarmlager den ersten Endabschnitt (2a) des Schaltarms (2) so in Bezug auf das Getriebegehäuse lagert,
dass die Schwenkachse (16) des zweiten Schaltarmlagers (13) in einer durch die Hochachse (z) und eine Längsachse (x) des Fahrzeugs gebildeten Mittellängsebene schräg in Bezug auf die Hochachse (z) und schräg in Bezug auf die Längsachse (x) verläuft.

2. Schalteinrichtung nach Anspruch 1, **dadurch gekennzeichnet, dass** das erste Schaltarmlager (9) an einer Stelle des Schaltarms (2) vorgesehen ist, die sich zwischen dem Schalthebel (4) und dem zweiten Schaltarmlager (13) befindet.

3. Schalteinrichtung nach Anspruch 1 oder 2, **dadurch gekennzeichnet, dass** der Schalthebel (4) gelenkig über eine Schaltstange (8) mit einer Schaltwelle des Handschaltgetriebes gekoppelt ist.

4. Schalteinrichtung nach einem der Ansprüche 1 bis 3, **dadurch gekennzeichnet, dass** der Schaltarm (2) über ein sich in Fahrzeugquerrichtung (y) erstreckendes Haltelement (10) und über das erste Schaltarmlager (9) mit der Karosserie (11) verbunden ist.

5. Schalteinrichtung nach Anspruch 4, **dadurch gekennzeichnet, dass** das Halteelement (10) zugsteif und drucksteif ist.

6. Schalteinrichtung nach Anspruch 4 oder 5, **dadurch gekennzeichnet, dass** zwischen dem Halteelement (10) und dem Schaltarm und/oder zwischen dem Haltelement (10) und der Karosserie (11) ein elastisches Element (12) vorgesehen ist.

7. Schalteinrichtung nach einem der Ansprüche 1 bis 6, **dadurch gekennzeichnet, dass** der Schaltarm (2) über das zweite Schaltarmlager (13) mit einem Koppelelement (14) verbunden ist, das schwenkbar um eine Querachse (15) am Getriebegehäuse gelagert ist.

8. Schalteinrichtung nach einem der Ansprüche 1 bis 7, **dadurch gekennzeichnet, dass** die Schwenkachse (16) des zweiten Schaltarmlagers (13), in Fahrtrichtung des Fahrzeugs betrachtet, von hinten unten schräg nach vorne oben verläuft.

9. Schalteinrichtung nach einem der Ansprüche 1 bis 8, **dadurch gekennzeichnet, dass** der Schaltarm (2) am dritten Schaltarmlager (17) über ein Elastomerelement (19), das in Querrichtung (y) elastisch ist, mit der Karosserie (18) gekoppelt ist.

10. Schalteinrichtung nach einem der Ansprüche 1 bis 9, **dadurch gekennzeichnet, dass** der Schalthebel (4) über ein Kugelgelenk (3) im oder am Schaltarm (2) gelagert ist.

11. Schalteinrichtung nach Anspruch 10, **dadurch gekennzeichnet, dass** die Schaltstange (8) unterhalb des Kugelgelenks (3) mit dem Schalthebel verbunden ist.

12. Schalteinrichtung nach Anspruch 10 oder 11, **dadurch gekennzeichnet, dass** die Schaltstange (8) über ein Schwenkgelenk (7), mit dem Schalthebel (4) gekoppelt ist, wobei das Schwenkgelenk (7) eine Schwenkachse aufweist, die, in einer Neutralstellung des Schalthebels (4) betrachtet, in einer Querrichtung (y) des Fahrzeugs verläuft.

13. Schalteinrichtung nach einem der Ansprüche 3 bis 12 **dadurch gekennzeichnet, dass** die Schaltstange (8) in Querrichtung (y) des Fahrzeugs seitlich neben dem Schaltarm verläuft.

## Claims

1. A gear-change device (1) for changing the gear on a manual gearbox of a vehicle with a gearbox casing, having
- a gear-change lever (4) and
- a gear-change arm (2) extending in a longitudinal direction (x) of the vehicle, on which arm the gear-change lever (4) is pivotably mounted,
wherein
- a first gear-change arm bearing (9) is provided by means of which the gear-change arm (2) at the location of the first gear-change arm bearing (9) is mounted pivotably about a vertical axis (z) of the vehicle which is perpendicular to the longitudinal direction (x) of the vehicle and non-displaceably or substantially non-displaceably in a transverse direction (y) of the vehicle with respect to a body (11) of the vehicle, wherein the transverse direction (y) is perpendicular to the longitudinal direction (x) of the vehicle and perpendicular to the vertical axis (z), and
- a second gear-change arm bearing (13), embodied as a pivot bearing, by means of which a first end portion (2a) of the gear-change arm (2) is mounted pivotably about a pivot axis (16) with respect to the gearbox casing, and
- a third gear-change arm bearing (17), by means of which a second end portion (2b) of the gear-change arm (2) which is remote from the first end portion (2a) is elastically and/or displaceably, directly or indirectly connected to a body element (18) of the body,
**characterised in that**
the second gear-change arm bearing, embodied as a pivot bearing, mounts the first end portion (2a) of the gear-change arm (2) relative to the gearbox casing such that the pivot axis (16) of the second gear-change arm bearing (13) in a central longitudinal plane formed by the vertical axis (z) and a longitudinal axis (x) of the vehicle runs obliquely relative to the vertical axis (z) and obliquely relative to the longitudinal axis (x).

2. A gear-change device according to Claim 1, **characterised in that** the first gear-change arm bearing (9) is provided at a location of the gear-change arm (2) which is located between the gear-change lever (4) and the second gear-change arm bearing (13).

3. A gear-change device according to Claim 1 or 2, **characterised in that** the gear-change lever (4) is coupled in articulated manner with a gear-change shaft of the manual gearbox by means of a gear-change rod (8).

4. A gear-change device according to one of Claims 1 to 3, **characterised in that** the gear-change arm (2) is connected to the body (11) by means of a holding element (10) extending in the transverse direction (y) of the vehicle and by means of the first gear-change arm bearing (9).

5. A gear-change device according to Claim 4, **characterised in that** the holding element (10) is tension-resistant and compression-resistant.

6. A gear-change device according to Claim 4 or 5, **characterised in that** an elastic element (12) is provided between the holding element (10) and the gear-change arm and/or between the holding element (10) and the body (11).

7. A gear-change device according to one of Claims 1 to 6, **characterised in that** the gear-change arm (2) is connected by means of the second gear-change arm bearing (13) to a coupling element (14) which is mounted pivotably about a transverse axis (15) on the gearbox casing.

8. A gear-change device according to one of Claims 1 to 7, **characterised in that** the pivot axis (16) of the second gear-change arm bearing (13), viewed in the direction of travel of the vehicle, runs from bottom back obliquely towards top front.

9. A gear-change device according to one of Claims 1 to 8, **characterised in that** the gear-change arm (2) at the third gear-change arm bearing (17) is coupled with the body (18) by means of an elastomeric element (19) which is elastic in the transverse direction (y).

10. A gear-change device according to one of Claims 1 to 9, **characterised in that** the gear-change lever (4) is mounted in or on the gear-change arm (2) by means of a ball-and-socket joint (3).

11. A gear-change device according to Claim 10, **characterised in that** the gear-change rod (8) is connected to the gear-change lever beneath the ball-and-socket joint (3).

12. A gear-change device according to Claim 10 or 11, **characterised in that** the gear-change rod (8) is coupled with the gear-change lever (4) by means of a pivot joint (7), the pivot joint (7) having a pivot axis which, viewed in a neutral position of the gear-change lever (4), runs in a transverse direction (y) of the vehicle.

13. A gear-change device according to one of Claims 3 to 12, **characterised in that** the gear-change rod (8) runs laterally next to the gear-change arm in the transverse direction (y) of the vehicle.

## Revendications

1. Dispositif de commutation (1) d'une boîte de vitesses manuelle d'un véhicule comprenant un carter de boîte de vitesses, comportant :
- un levier de commutation (4), et
- un bras de commutation (2) s'étendant dans la direction longitudinale (x) du véhicule sur lequel le levier de commutation (4) est monté pivotant,
dans lequel
- il est prévu un premier palier de bras de commutation (9) sur lequel et à l'emplacement duquel le bras de commutation (2) est monté, pivotant autour d'un axe vertical (z) perpendiculaire à la direction longitudinale (x) du véhicule et fixe en translation ou essentiellement fixe en translation dans la direction transversale (y) du véhicule par rapport à la carrosserie (11) de celui-ci, la direction transversale (y) étant perpendiculaire à la direction longitudinale (x) du véhicule et perpendiculaire à l'axe vertical (z),
- un second palier de bras de commutation (13) réalisé sous la forme d'un palier pivotant sur lequel un premier segment d'extrémité (2a) du bras de commutation (2) est monté pivotant autour d'un axe de pivotement (16) par rapport au carter de la boîte de vitesses, et
- un troisième palier de bras de commutation (17) sur lequel un second segment d'extrémité (2b) du bras de commutation (2) situé à l'opposé du premier segment d'extrémité (2a) est relié élastiquement et/ou mobile en translation directement ou indirectement avec un élément (18) de la carrosserie,
**caractérisé en ce que**
le premier palier du bras de commutation réalisé sous la forme d'un palier pivotant effectue le montage du premier segment d'extrémité (2a) du bras de commutation (2) par rapport au carter de la boîte de vitesses de sorte que
l'axe de pivotement (16) du second palier du bras de commutation (13) s'étende dans le plan longitudinal médian défini par l'axe vertical (z) et l'axe longitudinal (x) du véhicule obliquement par rapport à l'axe vertical (z) et obliquement par rapport à l'axe longitudinal (x).

2. Dispositif de commutation conforme à la revendication 1,
**caractérisé en ce que**
le premier palier du bras de commutation (9) est situé sur un emplacement du bras de commutation (2) qui se trouve entre le levier de commutation (4) et le second palier (13) du bras de commutation.

3. Dispositif de commutation conforme à la revendication 1 ou 2,
**caractérisé en ce que**
le levier de commutation (4) est articulé par l'intermédiaire d'une tige de commutation (8) sur un arbre de commutation de la boîte de vitesses manuelle.

4. Dispositif de commutation conforme à l'une des revendications 1 à 3,
**caractérisé en ce que**
le bras de commutation (2) est relié à la carrosserie (11) par l'intermédiaire d'un élément de retenue (10) s'étendant dans la direction transversale (y) du véhicule et par l'intermédiaire du premier palier (9) du bras de commutation.

5. Dispositif de commutation conforme à la revendication 4,
**caractérisé en ce que**
l'élément de retenue (10) est rigide en traction et en compression.

6. Dispositif de commutation conforme à la revendication 4 ou 5,
**caractérisé en ce qu'**
il est prévu un élément élastique (12) entre l'élément de retenue (10) et le bras de commutation et/ou entre l'élément de retenue (10) et la carrosserie (11).

7. Dispositif de commutation conforme à l'une des revendications 1 à 6,
**caractérisé en ce que**
le bras de commutation (2) est relié par l'intermédiaire du second palier du bras de commutation (13) à un élément d'accouplement (14) qui est monté pivotant sur le carter de la boîte de vitesses autour d'un axe transversal (15).

8. Dispositif de commutation conforme à l'une des revendications 1 à 7,
**caractérisé en ce que**
l'axe de pivotement (16) du second palier (13) du bras de commutation s'étend, obliquement dans la direction de déplacement du véhicule, de l'arrière et du bas vers l'avant et le haut.

9. Dispositif de commutation conforme à l'une des revendications 1 à 8,
**caractérisé en ce que**
le bras de commutation (2) est couplé à la carrosserie (18) au niveau du troisième palier (17) du bras de commutation par l'intermédiaire d'un élément élastomère (19) qui est élastique dans la direction transversale (y).

10. Dispositif de commutation conforme à l'une des revendications 1 à 9,
**caractérisé en ce que**
le levier de commutation (4) est monté dans ou sur le bras de commutation (2) par l'intermédiaire d'une articulation sphérique (3).

11. Dispositif de commutation conforme à la revendication 10,
**caractérisé en ce que**
la tige de commutation (8) est reliée au levier de commutation au-dessous de l'articulation sphérique (3).

12. Dispositif de commutation conforme à la revendication 10 ou 11,
**caractérisé en ce que**
la tige de commutation (8) est couplée au levier de commutation (4) par l'intermédiaire d'une articulation tournante (7), ayant un axe de pivotement qui s'étend, dans la position neutre du levier de commutation (4) dans la direction transversale (y) du véhicule.

13. Dispositif de commutation conforme à l'une des revendications 3 à 12,
**caractérisé en ce que**
la tige de commutation (8) s'étend latéralement à côté du bras de commutation dans la direction transversale (y) du véhicule.
